# FASCICULE DE BREVET EUROPEEN

(11) **EP 4 435 395 B1**
(45) Date de publication et mention de la délivrance du brevet: **02.04.2025**
(21) Numéro de dépôt: 24162578.9
(22) Date de dépôt: 11.03.2024
(51) Int. Cl.: G01K 7/32, G01K 7/01

(54) **CAPTEUR DE TEMPERATURE**
TEMPERATURSENSOR
TEMPERATURE SENSOR

(30) Priorité: 21.03.2023 FR 2302623
(43) Date de publication de la demande: 25.09.2024
(73) Titulaire: Commissariat à l'Energie Atomique et aux Energies Alternatives, 75015 Paris (FR)
(72) Inventeur: BADETS, Franck, 38054 GRENOBLE CEDEX 09 (FR)
(74) Mandataire: Cabinet Beaumont

(56) Documents cités:
- CN-A- 104 568 208
- US-A1- 2012 170 616

## Description

### Domaine technique

La présente description concerne de façon générale les circuits électroniques, et, plus particulièrement, les capteurs de température.

### Technique antérieure

De nombreux circuits intégrés, par exemple sur silicium, comprennent un capteur de température. Ce capteur de température, ou circuit de mesure de la température, permet de mesurer la température du circuit intégré, par exemple pour permettre un ajustement des paramètres du circuit intégré, par exemple de sa tension d'alimentation, en fonction de la température mesurée.

Un type connu de capteur de température utilise une mesure différentielle d'une grandeur temporelle, soit entre une grandeur temporelle constante en fonction de la température et une grandeur temporelle variant avec la température, soit entre deux grandeurs temporelles variant avec la température mais avec des coefficients de température très différents. Un exemple de grandeur temporelle est la fréquence d'un oscillateur. De tels capteurs de température sont par exemple divulgués par les demandes de brevet US 2012/170616 A1 et CN 104 568 208 A.

Toutefois, les capteurs de température connus basés sur une mesure différentielle de fréquence présentent des inconvénients.

### Résumé de l'invention

Il existe un besoin de pallier tout ou partie des inconvénients des capteurs de température intégrés connus basés sur une mesure différentielle de fréquence.

Un mode de réalisation correspondant à l'invention telle que revendiquée pallie tout ou partie des inconvénients des capteurs de température intégrés connus basés sur une mesure différentielle de fréquence.

Ledit mode de réalisation correspondant à l'invention telle que revendiquée prévoit un capteur de température comprenant :
un premier oscillateur et un deuxième oscillateur ;
un compteur configuré pour compter un nombre de périodes du deuxième oscillateur pendant une durée déterminée par une période du premier oscillateur ; et
un circuit de calcul configuré pour déterminer une valeur de température à partir dudit nombre compté (P). Le capteur est caractérisé en ce :
   l'un des premier et deuxième oscillateurs est configuré pour que sa fréquence dépende linéairement de la température ou de l'inverse de la température selon un coefficient multiple de l'inverse d'une valeur de résistance d'un composant résistif dudit l'un des premier et deuxième oscillateurs ;
   ledit composant résistif est mis en œuvre par une capacité commutée ; et
   une fréquence de commande de la capacité commutée est déterminée par la fréquence de l'autre des premier et deuxième oscillateurs.

Selon un mode de réalisation, ledit l'un des premier et deuxième oscillateurs comprend :
un circuit oscillant ; et
une source de courant configurée pour fournir un courant de polarisation au circuit oscillant, la source de courant étant de type proportionnel à la température absolue ou de type complémentaire à la température absolue.

Selon un mode de réalisation :
la source de courant comprend le composant résistif ;
le composant résistif est configuré pour convertir une tension en un premier courant ; et
la source de courant est configurée pour que le courant de polarisation soit une copie du premier courant à un facteur multiplicatif près.

Selon un mode de réalisation, le circuit oscillant est un oscillateur en anneau.

Selon un mode de réalisation, le circuit oscillant est un oscillateur à relaxation comprenant une bascule RS.

Selon un mode de réalisation, le circuit oscillant comprend le composant résistif.

Selon un mode de réalisation :
le circuit oscillant comprend au moins un premier inverseur ayant sa tension de seuil déterminant la fréquence dudit l'un des premier et deuxième oscillateurs ; et
ledit l'un des premier et deuxième oscillateurs comprend en outre :
   un deuxième inverseur identique au premier oscillateur et ayant sa sortie connectée à son entrée,
   un amplificateur d'erreur configuré pour fournir un signal indiquant un écart entre une tension de sortie du deuxième inverseur et une tension de seuil de référence, et un circuit configuré pour commander une tension de seuil des premier et deuxième inverseurs à partir du signal fourni par l'amplificateur d'erreur de sorte que la tension de seuil des premier et deuxième inverseurs soit égale à la tension de référence.

Selon un mode de réalisation, le capteur comprend un circuit de calibration configuré pour :
- recevoir du compteur le nombre P de périodes du deuxième oscillateur compté pendant la durée déterminée par la période du premier oscillateur ;
- déterminer, lorsque le circuit de calibration reçoit une requête de calibration, et à partir d'une température de calibration connue et du nombre P, un coefficient J constant tel que :
   a) P soit égal à J fois la température de calibration si ledit l'un des premier et deuxième oscillateurs est le premier oscillateur et a sa fréquence dépendant linéairement de l'inverse de la température ou si ledit l'un des premier et deuxième oscillateurs est le deuxième oscillateur et a sa fréquence dépendant linéairement de la température ; ou
   b) P soit égal à J fois l'inverse de la température si ledit l'un des premier et deuxième oscillateurs est le deuxième oscillateur et a sa fréquence dépendant linéairement de l'inverse de la température ou si ledit l'un des premier et deuxième oscillateurs est le premier oscillateur et a sa fréquence dépendant linéairement de la température.

Selon un mode de réalisation, le capteur est configuré pour que la durée déterminée par la fréquence du premier oscillateur soit au moins 100 fois plus grande qu'une période du deuxième oscillateur.

Selon un mode de réalisation, le capteur est configuré pour que la fréquence de commande de la capacité commutée soit au moins 10 fois plus grande que la fréquence dudit l'un des premier et deuxième oscillateurs.

Selon un mode de réalisation, chacun des premier et deuxième oscillateurs est dépourvu de quartz.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous la forme de blocs, un exemple d'un capteur de température ;
la figure 2 représente, sous la forme de blocs, un mode de réalisation d'un capteur de température ;
la figure 3 représente, sous la forme de blocs, un mode de réalisation d'un oscillateur du capteur de la figure 2 ;
la figure 4 représente un exemple de mode de réalisation d'une source de courant de l'oscillateur de la figure 3 ;
la figure 5 représente un exemple de mode de réalisation d'un circuit oscillant de l'oscillateur de la figure 3 ; et
la figure 6 représente un exemple d'un circuit de l'oscillateur de la figure 3.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les divers circuits intégrés connus dans lesquels un capteur de température est intégré n'ont pas été détaillés, les modes de réalisation et variantes décrits étant compatibles avec ces circuits intégrés connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

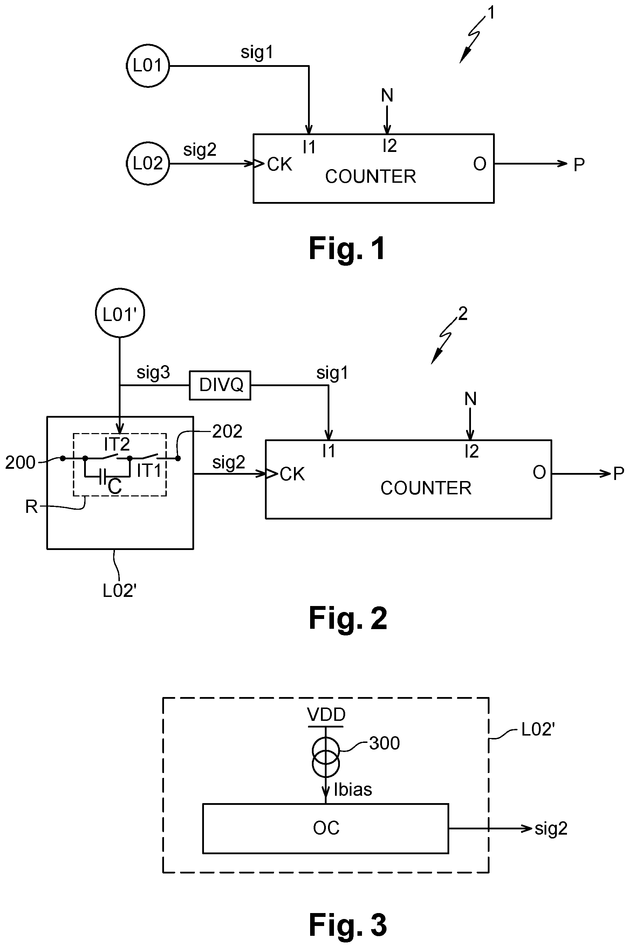

La figure 1 représente, sous la forme de blocs, un exemple d'un capteur de température 1, et plus particulièrement d'un capteur de température 1 basé sur une mesure différentielle de fréquence.

Le capteur 1 comprend un premier oscillateur LO1 et un deuxième oscillateur LO2, ainsi qu'un compteur COUNTER.

Le compteur COUNTER est configuré pour compter, pendant une durée D déterminée par la période du premier oscillateur LO1, c'est à dire par la période d'un signal de sortie de l'oscillateur LO1, un nombre P de périodes du deuxième oscillateur. La durée D correspond à un multiple, de préférence entier, de la période de l'oscillateur LO1.

Par exemple, le compteur COUNTER comprend une entrée I1 configurée pour recevoir un signal sig1 à une période déterminée par la période de l'oscillateur LO1, c'est à dire un signal sig1 dont la période est un multiple, de préférence entier, de la période du signal de sortie de l'oscillateur LO1. Par exemple, le signal sig1 est le signal de sortie de l'oscillateur LO1.

Par exemple, le compteur COUNTER comprend en outre une entrée I2 configurée pour recevoir un nombre N, de préférence entier. Le nombre N détermine, avec la période du signal sig1, la durée D de comptage. En effet, le compteur COUNTER est configuré pour que la durée D soit égale à N fois T1, avec T1 la période du signal sig1.

Par exemple, le compteur COUNTER comprend en outre une entrée CK configurée pour recevoir le signal de sortie sig2 de l'oscillateur LO2.

Par exemple, le compteur COUNTER comprend une sortie O configurée pour fournir le nombre P.

A la fin d'une durée D de comptage, le nombre P est égal à N.F2/F1 avec F1 la fréquence du signal sig1, et F2 la fréquence du signal sig2.

Au moins l'un des oscillateurs LO1 et LO2 a sa fréquence qui dépend linéairement de la température T ou de l'inverse de la température (c'est à dire 1/T).

Par exemple, lorsque la fréquence F1 du signal sig1, donc la fréquence de l'oscillateur LO1, est indépendante de la température et que la fréquence F2 du signal sig2 dépend linéairement de la température T selon la relation F2 = A.T, avec A un coefficient constant, alors P = N.A.T/F1. Comme la fréquence F1 est constante avec la température, que le nombre N est connu et que le coefficient A est constant, P = B.T avec B = N.A/F1. En déterminant B, par exemple lors d'une étape de calibration, la température T mesurée est directement égale au ratio P/B.

Par exemple, lorsque la fréquence F1 du signal sig1, donc la fréquence de l'oscillateur LO1, est indépendante de la température et que la fréquence F2 du signal sig2 dépend linéairement de l'inverse de la température T selon la relation F2 = A/T, avec A un coefficient constant, alors P = N.A/(F1.T). Comme la fréquence F1 est constante avec la température, que le nombre N est connu et que le coefficient A est constant, P = B/T avec B = N.A/F1. En déterminant B, par exemple lors d'une étape de calibration, la température T mesurée est directement égale au ratio B/P.

Par exemple, lorsque la fréquence F2 du signal sig2 est indépendante de la température et que la fréquence F1 du signal sig1, donc la fréquence de l'oscillateur LO1, dépend linéairement de la température T selon la relation F1 = E.T, avec E un coefficient constant, alors P = N.F2/(E.T). Comme la fréquence F2 est constante avec la température, que le nombre N est connu et que le coefficient E est constant, P = B/T avec B = N.F2/E. En déterminant B, par exemple lors d'une étape de calibration, la température T mesurée est directement égale au ratio B/P.

Par exemple, lorsque la fréquence F2 du signal sig2 est indépendante de la température et que la fréquence F1 du signal sig1, donc la fréquence de l'oscillateur LO1, dépend linéairement de l'inverse de la température T selon la relation F1 = E/T, avec E un coefficient constant, alors P = N.F2.T/E. Comme la fréquence F2 est constante avec la température, que le nombre N est connu et que le coefficient E est constant, P = B.T avec B = N.F2/E. En déterminant B, par exemple lors d'une étape de calibration, la température T mesurée est directement égale au ratio P/B.

Dans les exemples ci-dessus, l'un des oscillateurs doit avoir sa fréquence indépendante de la température. La mise en œuvre d'un tel oscillateur peut se faire grâce à un quartz, mais cela n'est pas souhaitable pour limiter la complexité, l'encombrement et le cout du capteur 1. Un oscillateur fournissant une fréquence indépendante de la température peut également être mis en œuvre autrement qu'avec un quartz, mais au prix d'une complexité encore plus grande du capteur 1.

Par ailleurs, même en utilisant un oscillateur qui intrinsèquement a sa fréquence qui ne dépend pas de la température, en pratique il faut polariser cet oscillateur avec un circuit de polarisation qui comprend généralement une ou plusieurs résistances. Ces résistances ont des valeurs de résistance qui dépendent de la température, ce qui entraîne que, en pratique, la fréquence de cet oscillateur ne sera pas complètement indépendante de la température. Il est alors nécessaire de prendre au moins deux points de calibration pour déterminer la relation entre la température T (ou l'inverse de la température 1/T) et le nombre P compté.

Dans d'autres exemples, les fréquences F1 et F2 peuvent dépendre toutes les deux de la température. Au minimum deux points de calibration sont alors nécessaires pour pouvoir déterminer la température mesurée à partir du nombre P, ce qui n'est pas souhaitable.

La figure 2 représente, sous la forme de blocs, un mode de réalisation d'un capteur de température 2 basé sur une mesure différentielle de la fréquence d'un oscillateur.

Le capteur 2 comprend, comme le capteur 1, un oscillateur LO1', un oscillateur LO2' et le compteur COUNTER. Le compteur COUNTER est, par exemple, identique à celui décrit en relation avec la figure 1. En particulier, le compteur COUNTER est configuré pour compter le nombre P de périodes de l'oscillateur LO2' pendant une durée D déterminée par la période de l'oscillateur LO1'.

L'oscillateur LO1' fournit un signal sig3 périodique de fréquence F3. La fréquence F3 détermine la durée D de comptage. Plus particulièrement, la durée D est égale à N*T1, avec T1 la période d'un signal sig1 ayant une fréquence F1 déterminée par la fréquence F3 du signal sig3, donc la fréquence F3 de l'oscillateur LO1'. Dit autrement, la fréquence F1 du signal sig1 est égal à 1/Q fois la fréquence F3 du signal sig3, avec Q un nombre constant supérieur ou égal à 1, Q étant de préférence un entier. Ainsi, la durée D est égale à N.Q/F3 et est donc bien déterminée par la période T3 du signal sig3. Le signal sig3 et le nombre N sont fournis au compteur COUNTER.

Par exemple, lorsque le coefficient Q est strictement supérieur à 1, le capteur 2 comprend un circuit DIVQ configuré pour recevoir le signal sig3 et pour fournir le signal sig1 avec une fréquence F1 égale à 1/Q fois la fréquence F3 du signal sig3. Dit autrement, le circuit DIVQ est un diviseur de fréquence par Q configuré pour fournir le signal sig1 à partir du signal sig3.

A titre d'exemple alternatif, lorsque le coefficient Q est égal à 1, le circuit DIVQ peut être omis, le signal sig1 étant alors directement le signal sig3.

A titre d'exemple, les nombres N et Q sont des nombres constants fixés une fois pour toute la durée de fonctionnement du capteur 2. A titre d'exemple alternatif, au moins l'un des nombres N et Q est un paramètre qui est fixé par l'utilisateur, de sorte que l'utilisateur puisse modifier la valeur de ce nombre, par exemple pendant la durée de vie du capteur 2 et/ou en fonction de l'application embarquant le capteur 2.

L'oscillateur LO2' fournit un signal sig2 périodique à la fréquence F2. Le signal sig2 est fourni au compteur COUNTER.

A titre d'exemple, comme en figure 1, le signal sig1 est fourni à l'entrée I1 du compteur COUNTER, le nombre N est fourni à l'entrée I2 du compteur COUNTER, le signal sig2 est fourni à l'entrée CK du compteur COUNTER et la sortie O du compteur fourni le nombre P.

De manière similaire à ce qui a été indiqué en relation avec la figure 1, à la fin de chaque durée D de comptage, le nombre P est égal à N.F2/F1, donc à N'.F2/F3 avec N' égal à N.Q.

L'un des oscillateurs LO1' et LO2' est configuré pour que sa fréquence dépende linéairement de la température T, ou de l'inverse de la température (1/T). En outre, cet oscillateur LO1' ou LO2' est configuré pour que sa fréquence soit en partie déterminée par l'inverse d'une valeur Rv de résistance d'un composant résistif R de cet oscillateur. Dit autrement, cet oscillateur est configuré pour que le coefficient reliant linéairement la température T (ou l'inverse de la température T) à sa fréquence soit un multiple de 1/Rv, avec Rv la valeur de résistance du composant résistif R.

Dans l'exemple de mode de réalisation de la figure 2, l'oscillateur LO2' est configuré pour que sa fréquence F2 dépende linéairement de la température T, selon un coefficient constant multiple de 1/Rv, le composant R faisant alors partie de cet oscillateur LO1'.

En outre, le composant résistif R est mis en œuvre par une capacité commutée. Dit autrement, le composant R est une capacité commutée. La capacité commutée R comprend un élément capacitif C, un interrupteur IT1 connecté en série avec le composant C entre des bornes 200 et 202 du composant résistif R, et un interrupteur IT2 connecté en parallèle de l'élément C. Les interrupteurs IT1 et IT2 sont commandés en opposition de phase. La fréquence Fc de commande de la capacité commutée R est déterminée par la fréquence de l'oscillateur LO1' ou LO2' qui ne comprend pas l'élément R, c'est à dire par la fréquence F3 de l'oscillateur LO1' dans l'exemple de la figure 2. Dit autrement, la fréquence Fc est égal à H fois la fréquence de l'oscillateur LO1' ou LO2' ne comprenant pas le composant R, c'est à dire à H fois la fréquence F3 dans l'exemple de la figure 1, H étant un nombre positif constant. De préférence, H est choisi de sorte que la fréquence Fc soit au moins dix fois plus grande que la fréquence de l'oscillateur LO1' ou LO2' dans lequel le composant R est mis en œuvre, c'est à dire pour que H.F3 > 10.F2 dans l'exemple de la figure 2.

Ainsi, dans l'exemple de la figure 2, où F2 est égal à G.T/Rv avec G un coefficient constant, comme la valeur Rv de résistance du composant résistif R est égal à 1/(Cv.Fc), avec Cv la valeur de capacité de l'élément capacitif C, alors F2 = G.T.Cv.Fc = G.T.Cv.F3.H.

En remplaçant F2 par son expression ci-dessus dans l'équation P = N'.F2/F3, il en résulte que P est égal à N'.G.T.Cv.H. Comme N', G, Cv et H sont des constantes, P est égal à J.T, avec J un coefficient constant et égal à N'.G.Cv.H.

De manière avantageuse, le coefficient J ne dépend pas de la fréquence F3 de l'oscillateur LO1'. La fréquence F3 de l'oscillateur LO1' peut alors dépendre de la température, sans que cela ne modifie la valeur du coefficient J, et donc sans que cela ne fausse la mesure de T. En effet, pour déterminer T à partir de P, il suffit alors de connaitre le coefficient J.

Selon un mode de réalisation, l'oscillateur LO1' ou LO2' qui ne comprend pas le composant R ne comprend pas non plus de quartz, et, plus généralement, aucun des oscillateur LO1' et LO2' ne comprend de quartz. Cela permet de réduire la complexité, l'encombrement et le coût du capteur 2 par rapport à un capteur 1 dans lequel soit l'oscillateur LO1, soit l'oscillateur LO2 comprend un quartz.

Selon un mode de réalisation, les oscillateurs LO1' et LO2' ont une même structure ou topologie, ce qui permet de réduire la dépendance du capteur 2 à la tension d'alimentation et/ou aux bruits de mode commun. Par exemple, les deux oscillateurs LO1' et LO2' comprennent chacun un oscillateur en anneau, ou comprennent chacun un oscillateur à relaxation, par exemple un oscillateur à relaxation comprenant une bascule RS ("RS Flip-Flop" en anglais).

Selon un mode de réalisation, la valeur du coefficient J est déterminée lors d'une phase de calibration. Par exemple, lorsqu'une calibration est requise, un nombre P est compté pendant une durée D correspondante, en ayant connaissance de la température de calibration T1 à laquelle se trouve le capteur 2. La valeur du coefficient J est alors égale à P/T1 dans l'exemple de la figure 2. De manière avantageuse, il n'y a besoin que d'un point de calibration.

Selon un mode de réalisation, la phase de calibration est mise en œuvre par un circuit de calibration du capteur 2 (non représenté en figure 2). Ce circuit de calibration est configuré pour recevoir le nombre P compté par le compteur COUNTER pendant une durée D, et pour déterminer, lorsque le circuit de calibration reçoit une requête de calibration correspondant à cette durée D de comptage, le coefficient J reliant le nombre P à la température T1 connue de calibration. Cela suppose que la requête de calibration reçue par le circuit de calibration est émise alors que le capteur 2 est à la température T1 de calibration. A titre d'exemple, la requête de calibration est fournie au capteur 2 et à son circuit de calibration par un opérateur ayant préalablement placé le capteur 2 à la température de calibration T1. La valeur de la température T1 de calibration peut être préalablement connue et stockée dans une mémoire du circuit de calibration, ou être fournie au capteur 2 et à son circuit de calibration conjointement à la requête de calibration.

Le capteur 2 comprend un circuit de calcul (non représenté en figure 2). Le circuit de calcul est configuré pour déterminer la valeur de la température T à partir du nombre P. Plus exactement, le circuit de calcul est configuré pour déterminer la valeur de la température à partir du nombre P et du coefficient J constant reliant P à la température T.

De préférence, pour obtenir une précision de mesure suffisante, la durée D est choisie au moins 100 fois plus grande que la durée d'une période de l'oscillateur LO2'.

De préférence, la fréquence Fc de commande de la capacité commutée R est au moins 10 fois plus grande que la fréquence de l'oscillateur comprenant cette capacité commutée R, à savoir la fréquence F2 de l'oscillateur LO2' dans l'exemple de la figure 2. Ainsi, dans l'exemple de la figure 2, de préférence, Fc > 10.F2.

La figure 3 représente, sous la forme de blocs, un exemple de mode de réalisation d'un oscillateur du capteur de la figure 2. Plus particulièrement, la figure 3 représente, sous la forme de blocs, un exemple de mode de réalisation de l'oscillateur du capteur 2 qui comprend la capacité commutée R, à savoir l'oscillateur LO2' en reprenant l'exemple de la figure 2. Toutefois, l'oscillateur LO1' peut être mis en œuvre de manière identique dans le cas où la capacité commutée R fait partie de l'oscillateur LO1' plutôt que de l'oscillateur LO2'.

L'oscillateur LO2' comprend un circuit oscillant OC, par exemple un oscillateur à relaxation pouvant comprendre une bascule RS, ou par exemple un oscillateur en anneau. Le circuit OC fournit le signal de sortie de l'oscillateur, c'est à dire le signal sig2 de sortie de l'oscillateur LO2' dans cet exemple.

L'oscillateur LO2' comprend en outre une source de courant 300 configurée pour fournir un courant Ibias de polarisation (ou d'alimentation) au circuit oscillant OC.

La source de courant 300 est de type CTAT (de l'anglais "Complementary To Absolute Temperature" - complémentaire à la température absolue) ou PTAT (de l'anglais "Proportional To Absolute Temperature" - proportionnelle à la température absolue). Ainsi, le courant Ibias varie linéairement avec la température.

A titre d'exemple, la source de courant 300 a une borne connectée à un potentiel d'alimentation VDD et une autre borne connectée à une borne d'alimentation du circuit OC.

Selon un mode de réalisation, bien que cela ne soit pas illustré par la figure 3, la capacité commutée R (figure 2) fait partie du circuit oscillant OC.

A titre de variante, bien que cela ne soit pas illustré par la figure 3, la capacité commutée R (figure 2) fait partie de la source de courant 300. De préférence, dans une telle variante, l'élément résistif R est configuré pour convertir une tension aux bornes 200, 202 (figure 2) de l'élément résistif R en un premier courant, et la source de courant 300 est configurée pour que son courant Ibias varie proportionnellement, par exemple linéairement, avec ce premier courant. Dit de manière plus précise, lorsque la source 300 est de type PTAT, respectivement CTAT, le composant R est configuré pour convertir une tension PTAT, respectivement CTAT, en un premier courant PTAT, respectivement CTAT, et la source 300 est configurée pour que le courant Ibias varie proportionnellement, par exemple linéairement, avec le premier courant.

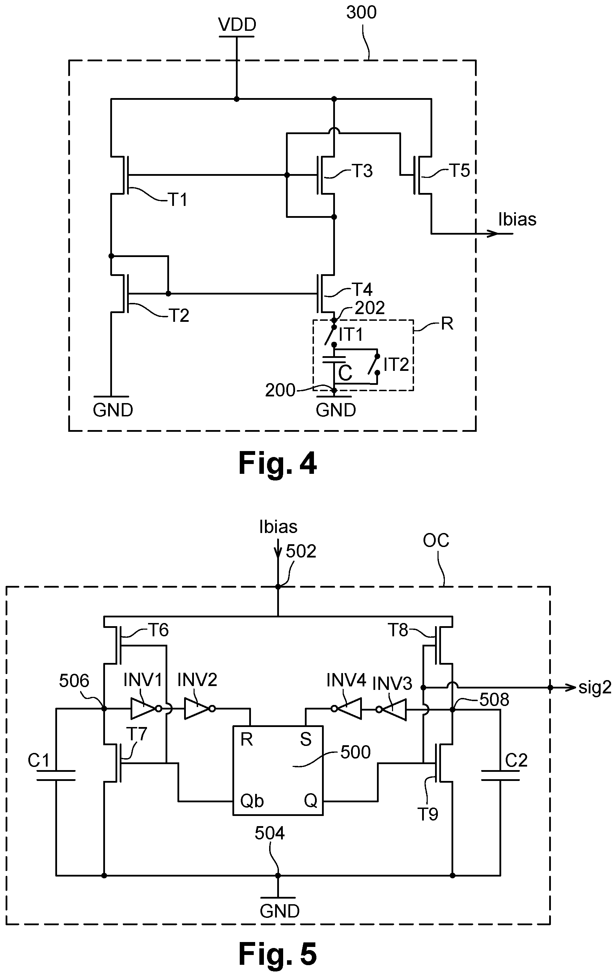

La figure 4 représente un exemple de mode de réalisation de la source de courant 300 de l'oscillateur de la figure 3. Dans cet exemple de mode de réalisation, la source de courant 300 est de type PTAT.

La source de courant 300 comprend deux transistors MOS (de l'anglais "Metal Oxide Silicon" - métal oxyde silicium) T1 et T2 en série entre un potentiel d'alimentation VDD et un potentiel de référence GND, le transistor T1 étant connecté au potentiel VDD et le transistor T2 étant connecté au potentiel GND. Dans cet exemple où le potentiel VDD est positif par rapport au potentiel GND, le transistor T1 est un transistor MOS à canal P, et le transistor T2 est à canal N. Par exemple, la source du transistor T1 est connectée au potentiel VDD, le drain du transistor T1 est connecté au drain du transistor T2, et la source du transistor T2 est connectée au potentiel GND. En outre, le transistor T2 a son drain connecté à sa grille.

La source de courant 300 comprend en outre un élément résistif et deux transistors MOS T3 et T4 en série entre le potentiel d'alimentation VDD et le potentiel de référence GND, le transistor T3 étant connecté au potentiel VDD et le transistor T4 étant couplé au potentiel GND par l'élément résistif. L'association série des transistors T1 et T2 est connectée en parallèle de l'association en série des transistors T3 et T4 et de l'élément résistif. Dans cet exemple où le potentiel VDD est positif par rapport au potentiel GND, le transistor T3 est un transistor MOS à canal P, et le transistor T4 est à canal N. Par exemple, la source du transistor T3 est connectée au potentiel VDD, le drain du transistor T3 est connecté au drain du transistor T4, et la source du transistor T4 est couplée au potentiel GND par l'élément résistif. En outre, le transistor T3 a son drain connecté à sa grille.

De plus, les transistors T1 et T3 ont leurs grilles connectées l'une à l'autre, et les transistors T2 et T4 ont leurs grilles connectées l'une à l'autre.

L'élément résistif couplant le transistor T4 au potentiel GND est configuré pour convertir une tension à ses bornes en un premier courant, et la source de courant 300 est configurée pour que son courant Ibias recopie ce premier courant, c'est à dire pour que le courant Ibias soit égal au premier courant à un facteur multiplicatif près, ce facteur multiplicatif étant constant.

Dans cet exemple de mode de réalisation, le composant résistif R fait partie de la source de courant 300, et correspond à l'élément résistif couplant le transistor T4 au potentiel GND.

Dans un autre exemple non illustré où le composant résistif R fait partie du circuit oscillant OC, l'élément résistif couplant le transistor T4 au potentiel GND est mis en œuvre par une résistance.

La source de courant 300 comprend en outre un transistor MOS T5, à canal du même type que celui du transistor T3. Le transistor T5 a sa grille connectée à la grille du transistor T3, sa source connectée au potentiel VDD et son drain configuré pour fournir le courant Ibias.

Dans l'exemple de la figure 4, le courant Ibias est égal à ((k.T)/(Rv.q)).ln(n), avec k la constante de Boltzmann, T la température en Kelvin, q la charge d'un électron, n le rapport entre les largeurs des transistors T2 et T4 et Rv la valeur de résistance du composant R en ohm..

Ainsi, le courant Ibias varie linéairement avec la température.

Bien que l'on ait décrit ci-dessus un exemple de source de courant de type PTAT, la personne du métier sera en mesure de prévoir d'autres exemples de sources de courant de type PTAT, et, plus généralement, d'autres sources de courant 300 de type PTAT ou CTAT. De préférence, dans ces autres exemples de mise en œuvre de la source de courant 300, lorsque la source de courant 300 comprend le composant résistif R, ce composant R est configuré pour convertir une tension à ses bornes 200, 202 en un premier courant et la source 300 est configurée pour que le courant Ibias soit une recopie du premier courant, c'est-à-dire soit égal au premier courant à un facteur multiplicatif près, ce facteur multiplicatif étant constant.

La figure 5 représente un exemple de mode de réalisation du circuit OC de l'oscillateur de la figure 3.

Dans cet exemple, le circuit OC est un oscillateur à relaxation, et, plus exactement, un oscillateur à relaxation comprenant une bascule RS (référencé 500 en figure 5).

Dans cet exemple, le composant R (figure 2) ne fait pas partie du circuit OC, et fait partie de la source de courant 300, cette dernière étant par exemple mise en œuvre de la façon illustrée en figure 4.

Le circuit OC comprend une borne d'alimentation 502 configurée pour recevoir le courant Ibias.

Le circuit OC comprend deux transistors MOS T6 et T7 en série entre le noeud 502 et un noeud 504 configuré pour recevoir le potentiel de référence GND, et deux transistors MOS T8 et T9 connectés en série entre les noeuds 502 et 504, les transistors T6 et T8 étant connectés au noeud 502 et les transistors T7 et T9 étant connectés au noeud 504.

Dans cet exemple où le potentiel VDD auquel est connecté la source 300 fournissant le courant Ibias (figure 2) est positif par rapport au potentiel GND, les transistors T6 et T8 sont à canal P et les transistors T7 et T9 sont à canal N.

A titre d'exemple, les transistors T6 et T8 ont leurs sources connectées au noeud 502 et leurs drains connectés aux drains des transistors T7 et T9 respectivement, ces derniers ayant leurs sources connectées au noeud 504.

Les grilles des transistors T6 et T7 sont connectées à une sortie Qb de la bascule 500, et les grilles des transistors T8 et T9 sont connectées à une sortie Q de la bascule 500.

Un élément capacitif C1 couple le noeud 504 à un noeud de connexion 506 du transistors T6 au transistor T7, et un élément capacitif C2 couple le noeud 504 à un noeud de connexion 508 du transistors T8 au transistor T9. De préférence, et bien que cela ne soit pas indispensable, les éléments capacitifs C1 et C2 sont identiques, c'est à dire qu'ils ont une même valeur de capacité.

Le circuit OC comprend en outre un nombre pair d'inverseurs en série couplant le noeud 506 à une entrée R de la bascule 500 et le même nombre pair d'inverseurs en série couplant le noeud 506 à une entrée S de la bascule RS.

Dans l'exemple de la figure 5, le circuit OC comprend deux inverseurs INV1 et INV2 en série couplant le noeud 506 à l'entrée R, et deux inverseurs INV3 et INV4 couplant le noeud 508 à l'entrée S. L'inverseur INV1 a son entrée connectée au noeud 506, et l'inverseur INV3 a son entrée connectée au noeud 508. A titre d'exemple, au moins les inverseurs INV1 et INV3 sont identiques, et, de préférence, les inverseurs INV1 à INV4 sont tous identiques.

Le signal de sortie sig2 du circuit oscillant OC, donc de l'oscillateur LO2' dans cet exemple, a une fréquence F2 égale à Ibias/(2.C1v.Vth), avec C1v la valeur de capacité de chacun des éléments capacitifs C1 et C2, et Vth le seuil de basculement des inverseurs INV1 et INV3.

Ainsi, dans cet exemple, du fait que le courant Ibias dépend linéairement de la température T et est en partie déterminée par la valeur 1/Rv, la fréquence F2 va également dépendre linéairement de la température T selon un coefficient constant multiple 1/Rv. Dit autrement, F2 est égal à G.T/Rv avec G un coefficient constant. Comme la valeur Rv est égale à 1/(Cv.Fc), alors F2 = G.T.Cv.Fc, d'où il résulte que F2 = G.T.Cv.F3.H du fait que Fc = H.F3. En injectant l'expression de F2 ci-dessus dans l'équation P = N'.F2/F3, il en résulte que P est égal à N'.G.T.Cv.H, donc J.T, avec J un coefficient constant et égal à N'.G.Cv.H.

Plus particulièrement, dans le cas où la source 300 est mise en œuvre de la façon illustrée en relation avec la figure 4 et où l'oscillateur est mis en œuvre de la façon décrite en relation avec la figure 5, le courant Ibias est égal à ((k.T)/(Rv.q)).ln(n), donc à ((k.T.Cv.Fc)/q).ln(n) = ((k.T.Cv.F3.H)/q).ln(n), et la fréquence F2 est égale à Ibias/(2.C1v.Vth). Il en résulte que F2 = (k.T.Cv.F3.H.ln(n))/(q.2.C1v.Vth). En remplaçant F2 par son expression ci-dessus dans l'équation P = N'.F2/F3, il en résulte que :
P = (N'.k.T.Cv.F3.H.ln(n))/(q.2.C1v.Vth.F3), donc
P = (N'.k.T.Cv.H.ln(n))/(q.2.C1v.Vth), ou encore
P= J.T avec J = (N'.k.Cv.H.ln(n))/(q.2.C1v.Vth), le coefficient J étant constant et indépendant de la température, au moins au premier ordre.

Un avantage de l'exemple particulier ci-dessus est que le coefficient J ne dépend d'aucune valeur de résistance qui pourrait varier avec la température.

Un autre avantage de cet exemple particulier est que le rapport de valeur de capacité Cv/C1v est indépendant de la température au premier ordre, car c'est un rapport entre des valeurs qui, si elles varient avec la température T, ont des coefficients identiques de variation avec la température.

Bien que le seuil Vth puisse dépendre de la température T, cette dépendance du seuil Vth à la température est négligeable devant la dépendance du courant Ibias à la température, et le seuil Vth peut donc être considéré comme constant.

Pour déterminer le coefficient J, une phase de calibration telle que décrite précédemment en relation avec la figure 2 peut être mise en oeuvre, notamment, dans l'exemple particulier ci-dessus, pour déterminer la valeur du seuil Vth qui peut dépendre du procédé de fabrication.

L'exemple particulier décrit ci-dessus illustre un mode de réalisation dans lequel l'oscillateur LO2' a sa fréquence F2 qui dépend linéairement de T selon un coefficient constant multiple de 1/Rv, et où la capacité commutée R de valeur Rv est mise en œuvre dans la source de courant 300.

A titre d'exemple alternatif, l'oscillateur LO2' peut être mis en œuvre de la manière décrite en relation avec la figure 3 et son circuit OC est un oscillateur en anneau.

Dans d'autres modes de réalisation, la capacité commutée R est mise en œuvre dans le circuit OC de l'oscillateur LO2', et la capacité commutée R de la source de courant 300 est remplacée par un composant résistif.

Comme cela a été indiqué en relation avec l'exemple particulier de la figure 5, le seuil Vth d'un inverseur dépend de la température T, mais cette dépendance peut être négligée.

Plus généralement, dans un oscillateur du type de celui décrit en relation avec la figure 3, lorsque la fréquence du circuit oscillant OC de cet oscillateur est au moins en partie déterminée par la tension de seuil Vth d'un ou plusieurs inverseurs du circuit oscillant OC, la dépendance du seuil Vth à la température est considérée comme négligeable.

Toutefois, pour améliorer la précision de mesure d'un capteur 2 dans lequel l'oscillateur comprenant la capacité commutée R est du type décrit en relation avec la figure 3 et a sa fréquence au moins en partie déterminée par la tension de seuil Vth d'un ou plusieurs inverseurs du circuit oscillant OC de cet oscillateur, un mode de réalisation prévoit d'asservir la tension de seuil Vth de ces inverseurs pour la rendre constante et indépendante de la température.

Dans un tel mode de réalisation, cet oscillateur a un circuit configuré pour maintenir la tension Vth constante et indépendante de la température, par exemple en modifiant la puissance d'alimentation fournie à ces inverseurs et/ou en modulant la tension de grille arrière des transistors mettant en œuvre ces inverseurs en technologie SOI (de l'anglais "Silicon On Insulator" - silicium sur isolant).

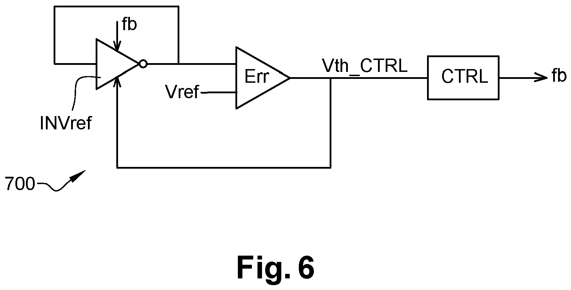

La figure 6 illustre un exemple d'un tel circuit d'asservissement de la tension Vth d'inverseurs du circuit oscillant OC d'un oscillateur, par exemple des inverseurs INV1 et INV3 du circuit oscillant OC de la figure 5.

Le circuit, référencé 700 en figure 6, comprend un inverseur INVref identique à l'inverseur ou aux inverseurs dont le seuil Vth est asservi par le circuit 700.

L'inverseur INVref a sa sortie connectée à son entrée, d'où il résulte que sa sortie se place à la tension de seuil Vth de l'inverseur INVref.

Le circuit 700 comprend en outre un amplificateur d'erreur ERR configuré pour fournir un signal Vth_CTRL représentatif de l'erreur, ou écart, entre la tension de sortie de l'inverseur INVref, égale à Vth, et une tension de référence ou de consigne Vref.

Le circuit 700 comprend en outre un circuit CTRL configuré pour fournir un signal fb à partir du signal Vth_CTRL. Le circuit ERR est configuré pour commander la tension de seuil de l'inverseur INVref et des inverseurs, par exemple INV1 et INV3, du circuit OC, de sorte que la tension de sortie de l'inverseur INVref, donc la tension de seuil Vth de cet inverseur INVref et des inverseurs du circuit OC ayant leur tension Vth asservie par le circuit 700, soit égale à la tension Vref.

Ainsi, le circuit 700 permet d'asservir la tension de seuil des inverseurs qu'il commande à la tension de référence Vref.

Par exemple, lorsque les inverseurs sont mis en œuvre par des transistors MOS sur SOI, le signal fb est un signal de commande de la grille arrière de ces transistors.

On a décrit ci-dessus des exemples de mode de réalisation dans lesquels l'oscillateur LO2' a sa fréquence F2 qui dépend linéairement de la température et comprend la capacité commutée R commandée à partir de la F3 fréquence de l'oscillateur LO1'.

La personne du métier est en mesure de prévoir, à partir de la description faite ci-dessus, des modes de réalisation dans lesquels l'oscillateur LO2' a sa fréquence F2 qui dépend linéairement de l'inverse de la température, c'est à dire de 1/T, et comprend la capacité commutée R commandée à partir de la fréquence F3 de l'oscillateur LO1'. Dans ce cas, la fréquence F2 est égale à G/(Rv.T) avec G un coefficient constant et la valeur Rv du composant résistif R est égal à 1/(Cv.Fc), donc à 1/(Cv.H.F3) avec H un coefficient constant, d'où il résulte que F2 = (G.Cv.F3.H)/T. En remplaçant F2 par son expression ci-dessus dans l'équation P = N'.F2/F3, il en résulte que P est égal à (N'.G.Cv.H)/T, donc à J/T, avec J un coefficient constant et égal à N'.G.Cv.H. De manière avantageuse, le coefficient J ne dépend alors pas de la fréquence F3 de l'oscillateur LO2'. Pour déterminer T à partir de P, il suffit alors de connaitre le coefficient J, par exemple en le déterminant lors d'une phase de calibration telle que décrite en relation avec la figure 2, cette phase de calibration étant par exemple mise en œuvre par le circuit de calibration décrit en relation avec la figure 2.

Dans ces modes de réalisation, lorsque la fréquence de l'oscillateur LO2', donc le coefficient J, dépend de la tension de seuil Vth d'un ou plusieurs inverseurs de l'oscillateur LO2', la personne du métier saura mettre en œuvre un asservissement de la tension de seuil Vth de ce ou ces inverseurs, par exemple au moyen du circuit 700 décrit en relation avec la figure 6, de sorte que cette tension Vth soit constante et indépendante de la température.

On a décrit ci-dessus des exemples de modes de réalisation dans lesquels c'est l'oscillateur LO2' qui a sa fréquence F2 qui dépend linéairement de la température ou de l'inverse de la température, et comprend la capacité commutée R commandée à partir de la fréquence F3 de l'oscillateur LOI1'.

La personne du métier est en mesure de prévoir, à partir de la description faite ci-dessus, de modes de réalisation dans lesquels l'oscillateur LO1' a sa fréquence F3 qui dépend linéairement de la température ou de l'inverse de la température, et comprend la capacité commutée R, cette capacitée commutée étant alors commandée à partir de la fréquence F2 de l'oscillateur LO2'. Dans ce cas, l'oscillateur LO1' est par exemple mis en œuvre de la façon décrite en relation avec la figure 3.

Par exemple, la personne du métier est en mesure de prévoir, à partir de la description faite ci-dessus, des modes de réalisation dans lesquels l'oscillateur LO1' a sa fréquence F3 qui dépend linéairement de la température T et comprend la capacité commutée R commandée à partir de la fréquence F2 de l'oscillateur LO2'. Dans ce cas, la fréquence F3 est égale à G.T/Rv, avec G un coefficient constant, et la valeur Rv de la capacité commutée R est égale à 1/Cv.Fc, avec Fc = H.F2 et H un coefficient constant. Il en résulte que F3 = G.Cv.H.F2.T. En remplaçant F3 par son expression ci-dessus dans l'équation P = N'.F2/F3, il en résulte que P est égal à (N'.F2)/(G.Cv.H.F2.T), donc à J/T avec J un coefficient constant et égal à N' / (G.Cv.H). De manière avantageuse, le coefficient J ne dépend alors pas de la fréquence F2 de l'oscillateur LO2', qui peut varier avec la température. Pour déterminer T à partir de P, il suffit alors de connaitre le coefficient J, par exemple en le déterminant lors d'une phase de calibration telle que décrite en relation avec la figure 2, cette phase de calibration étant par exemple mise en œuvre par le circuit de calibration décrit en relation avec la figure 2.

A titre d'exemple alternatif, la personne du métier est en mesure de prévoir, à partir de la description faite ci-dessus, des modes de réalisation dans lesquels l'oscillateur LO2' a sa fréquence F3 qui dépend linéairement de l'inverse de la température, 1/T, et comprend la capacité commutée R commandée à partir de la fréquence F2 de l'oscillateur LO2'. Dans ce cas, la fréquence F3 est égal à G/(Rv.T), avec G un coefficient constant, et la valeur Rv de la capacité commutée R est égale à 1/Cv.Fc, avec Fc = H.F2 et H un coefficient constant. Il en résulte que F3 = (G.Cv.H.F2)/T. En remplaçant F3 par son expression ci-dessus dans l'équation P = N'.F2/F3, il en résulte que P est égal à (N'.F2.T)/(G.Cv.H.F2), donc à J.T avec J un coefficient constant et égal à N'/(G.Cv.H). De manière avantageuse, le coefficient J ne dépend alors pas de la fréquence F2 de l'oscillateur LO2', qui peut varier avec la température. Pour déterminer T à partir de P, il suffit alors de connaitre le coefficient J, par exemple en le déterminant lors d'une phase de calibration telle que décrite en relation avec la figure 2, cette phase de calibration étant par exemple mise en œuvre par le circuit de calibration décrit en relation avec la figure 2.

Dans ces modes de réalisation, lorsque la fréquence de l'oscillateur LO2', donc le coefficient J, dépend de la tension de seuil Vth d'un ou plusieurs inverseurs de l'oscillateur LO2', la personne du métier saura mettre en œuvre un asservissement de la tension de seuil Vth de ce ou ces inverseurs, par exemple au moyen du circuit 700 décrit en relation avec la figure 6, de sorte que cette tension Vth soit constante et indépendante de la température.

Ainsi, dans tous les exemples de modes de réalisation et de variante décrits, l'oscillateur LO1' ou LO2' qui ne comprend pas la capacité commutée R et qui a sa fréquence qui dépend linéairement de T/Rv ou de 1/(T.Rv) peut avoir sa fréquence qui dépend de la température sans que cela ne fausse la mesure de température, du fait que sa fréquence détermine la fréquence Fc de commande de la capacité commutée R ce qui permet de supprimer l'influence de la fréquence de cet oscillateur fréquence dans la relation linéaire reliant P et la température T ou l'inverse de la température 1/T.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, la mise en œuvre de l'oscillateur LO1' ou LO2' comprenant la capacité commutée R ne se limite pas à la structure décrite en relation avec la figure 3, et encore moins aux exemples de sources de courant 300 et de circuits oscillants OC décrits en relation avec les figures 3 à 5. En outre, lorsque l'oscillateur LO1' ou LO2' comprenant la capacité commutée R a une structure du type de celle de la figure 3, la personne du métier sera en mesure de prévoir une source 300 de type CTAT plutôt que PTAT comme décrit en relation avec la figure 4. En particulier, la personne du métier sera en mesure, dans des modes de réalisation, de mettre en œuvre la source 300 de sorte qu'elle comprenne la capacité commutée R pour convertir une tension en un courant déterminant le courant Ibias.

Enfin, la mise en oeuvre pratique des modes de réalisation et variantes décrits est à la portée de la personne du métier à partir des indications fonctionnelles données ci-dessus.

## Revendications

1. Capteur de température (2) comprenant :
un premier oscillateur (LO1') et un deuxième oscillateur (LO2') ;
un compteur (COUNTER) configuré pour compter un nombre (P) de périodes du deuxième oscillateur (LO2') pendant une durée déterminée par une période du premier oscillateur (LO1') ; et
un circuit de calcul configuré pour déterminer une valeur de température à partir dudit nombre compté (P),
le capteur étant **caractérisé en ce que** :
l'un (LO1' ; LO2') des premier et deuxième oscillateurs (LO1', LO2') est configuré pour que sa fréquence dépende linéairement de la température ou de l'inverse de la température selon un coefficient multiple de l'inverse d'une valeur de résistance d'un composant résistif (R) dudit l'un (LO1' ; LO2') des premier et deuxième oscillateurs ;
ledit composant résistif (R) est mis en œuvre par une capacité commutée ; et
une fréquence de commande de la capacité commutée (R) est déterminée par la fréquence de l'autre (LO2' ; LO1') des premier et deuxième oscillateurs.

2. Capteur selon la revendication 1, dans lequel ledit l'un (LO1' ; LO2') des premier et deuxième oscillateurs (LO1', LO2') comprend :
un circuit oscillant (OC) ; et
une source de courant (300) configurée pour fournir un courant de polarisation (Ibias) au circuit oscillant (C),
la source de courant (300) étant de type proportionnel à la température absolue ou de type complémentaire à la température absolue.

3. Capteur selon la revendication 2, dans lequel :
la source de courant (300) comprend le composant résistif (R) ;
le composant résistif (R) est configuré pour convertir une tension en un premier courant ; et
la source de courant (300) est configurée pour que le courant de polarisation (Ibias) soit une copie du premier courant à un facteur multiplicatif près.

4. Capteur selon la revendication 3, dans lequel le circuit oscillant (OC) est un oscillateur en anneau.

5. Capteur selon la revendication 3, dans lequel le circuit oscillant (OC) est un oscillateur à relaxation comprenant une bascule RS (500).

6. Capteur selon la revendication 2, dans lequel le circuit oscillant (OC) comprend le composant résistif (R).

7. Capteur selon l'une quelconque des revendications 2 à 6, dans lequel :
le circuit oscillant (OC) comprend au moins un premier inverseur (INV1, INV3) ayant sa tension de seuil déterminant la fréquence dudit l'un (LO1' ; LO2') des premier et deuxième oscillateurs (LO1', LO2') ; et
ledit l'un (LO1' ; LO2') des premier et deuxième oscillateurs comprend en outre :
un deuxième inverseur (INVref) identique au premier oscillateur et ayant sa sortie connectée à son entrée,
un amplificateur d'erreur (ERR) configuré pour fournir un signal (Vth_CTRL) indiquant un écart entre une tension de sortie du deuxième inverseur (INVref) et une tension de seuil de référence (Vref), et
un circuit (CTRL) configuré pour commander une tension de seuil des premier et deuxième inverseurs (INVref ; INV1, INV3) à partir du signal (Vth_CTRL) fourni par l'amplificateur d'erreur (ERR) de sorte que la tension de seuil des premier et deuxième inverseurs soit égale à la tension de référence (Vref).

8. Capteur selon l'une quelconque des revendications 1 à 7, dans lequel le capteur comprend un circuit de calibration configuré pour :
- recevoir du compteur (COUNTER) le nombre P de périodes du deuxième oscillateur (LO2') compté pendant la durée déterminée par la période du premier oscillateur (LO1') ;
- déterminer, lorsque le circuit de calibration reçoit une requête de calibration, et à partir d'une température de calibration connue et du nombre P, un coefficient J constant tel que :
a) P soit égal à J fois la température de calibration si ledit l'un des premier et deuxième oscillateurs (LO1', LO2') est le premier oscillateur (LO1') et a sa fréquence dépendant linéairement de l'inverse de la température ou si ledit l'un des premier et deuxième oscillateurs est le deuxième oscillateur (LO2') et a sa fréquence dépendant linéairement de la température ; ou
b) P soit égal à J fois l'inverse de la température si ledit l'un des premier et deuxième oscillateurs est le deuxième oscillateur (LO2') et a sa fréquence dépendant linéairement de l'inverse de la température ou si ledit l'un des premier et deuxième oscillateurs est le premier oscillateur (LO1') et a sa fréquence dépendant linéairement de la température.

9. Capteur selon l'une quelconque des revendications 1 à 8, dans lequel le capteur est configuré pour que la durée déterminée par la fréquence du premier oscillateur soit au moins 100 fois plus grande qu'une période du deuxième oscillateur (LO2').

10. Capteur selon l'une quelconque des revendications 1 à 9, dans lequel le capteur est configuré pour que la fréquence de commande de la capacité commutée (R) soit au moins 10 fois plus grande que la fréquence dudit l'un des premier et deuxième oscillateurs.

11. Capteur selon l'une quelconque des revendications 1 à 10, dans lequel chacun des premier et deuxième oscillateurs est dépourvu de quartz.

## Patentansprüche

1. Temperatursensor (2) der Folgendes aufweist:
einen ersten Oszillator (LO1') und einen zweiten Oszillator (LO2');
einen Zähler (COUNTER), der eingerichtet ist zum Zählen einer Anzahl (P) von Perioden des zweiten Oszillators (LO2') über eine Dauer, die durch eine Periode des ersten Oszillators (LO1') bestimmt wird; und
eine Berechnungsschaltung, die eingerichtet ist zum Bestimmen eines Temperaturwerts basierend auf der gezählten Anzahl (P),
wobei der Sensor **dadurch gekennzeichnet ist, dass**:
einer (LO1'; LO2') der ersten und zweiten Oszillatoren (LO1', LO2') eingerichtet ist, so dass seine Frequenz linear von der Temperatur oder dem Kehrwert der Temperatur abhängt, und zwar gemäß einem Koeffizienten, der ein Vielfaches des Kehrwerts eines Widerstandswerts einer Widerstandskomponente (R) des einen (LO1'; LO2') der ersten und zweiten Oszillatoren ist;
die Widerstandskomponente (R) durch ein geschaltetes kapazitives Element realisiert ist; und
eine Steuerfrequenz des geschalteten kapazitiven Elements (R) durch die Frequenz des anderen (LO2'; LO1') der ersten und zweiten Oszillatoren bestimmt wird.

2. Sensor nach Anspruch 1, wobei der eine (LO1'; LO2') der ersten und zweiten Oszillatoren (LO1', LO2') Folgendes aufweist:
eine Oszillatorschaltung (OC); und
eine Stromquelle (300), die eingerichtet ist zum Liefern eines Vorspannstroms (Ibias) an die Oszillatorschaltung (OC), wobei die Stromquelle (300) vom Typ proportional zur absoluten Temperatur oder vom Typ komplementär zur absoluten Temperatur ist.

3. Sensor nach Anspruch 2, wobei:
die Stromquelle (300) die Widerstandskomponente (R) aufweist;
die Widerstandskomponente (R) eingerichtet ist zum Umwandeln einer Spannung in einen ersten Strom; und
die Stromquelle (300) eingerichtet ist, so dass der Vorspannstrom (Ibias) eine Kopie des ersten Stroms bis auf einen Multiplikationsfaktor ist.

4. Sensor nach Anspruch 3, wobei die Oszillatorschaltung (OC) ein Ringoszillator ist.

5. Sensor nach Anspruch 3, wobei die Oszillatorschaltung (OC) ein Relaxationsoszillator ist, der ein RS-Flip-Flop (500) aufweist.

6. Sensor nach Anspruch 2, wobei die Oszillatorschaltung (OC) das Widerstandselement (R) aufweist.

7. Sensor nach einem der Ansprüche 2 bis 6, wobei:
die Oszillatorschaltung (OC) wenigstens einen ersten Inverter (INV1, INV3) aufweist, dessen Schwellenwertspannung die Frequenz des einen (LO1'; LO2') des ersten und zweiten Oszillators (LO1', LO2') bestimmt; und
der eine (LO1'; LO2') der ersten und zweiten Oszillatoren weiterhin Folgendes aufweist:
einen zweiten Inverter (INVref), der mit dem ersten Oszillator identisch ist und dessen Ausgang mit seinem Eingang verbunden ist,
einen Fehlerverstärker (ERR), der eingerichtet ist zum Liefern eines Signals (Vth_CTRL), das eine Abweichung zwischen einer Ausgangsspannung des zweiten Inverters (INVref) und einer Referenzschwellenwertspannung (Vref) anzeigt, und
eine Schaltung (CTRL), die eingerichtet ist zum Steuern einer Schwellenwertspannung des ersten und zweiten Inverters (INVref; INV1, INV3) basierend auf dem Signal (Vth_CTRL), das von dem Fehlerverstärker (ERR) geliefert wird, so dass die Schwellenwertspannung des ersten und zweiten Inverters gleich der Referenzspannung (Vref) ist.

8. Sensor nach einem der Ansprüche 1 bis 7, wobei der Sensor eine Kalibrierungsschaltung aufweist, die eingerichtet ist zum:
- Empfangen, von dem Zähler (COUNTER), der Anzahl P der Perioden des zweiten Oszillators (LO2'), gezählt über die Dauer, die durch die Periode des ersten Oszillators (LO1') bestimmt wird;
- Bestimmen, wenn die Kalibrierungsschaltung eine Kalibrierungsanforderung empfängt, und basierend auf einer bekannten Kalibrierungs-Temperatur und auf der Anzahl P, eines konstanten Koeffizienten J derart, dass:
a) P gleich dem J-fachen der Kalibriertemperatur ist, wenn der eine der ersten und zweiten Oszillatoren (LO1', LO2') der erste Oszillator (LO1') ist und seine Frequenz linear vom Kehrwert der Temperatur abhängt oder wenn der eine der ersten und zweiten Oszillatoren der zweite Oszillator (LO2') ist und seine Frequenz linear von der Temperatur abhängt; oder
b) P gleich dem J-fachen des Kehrwerts der Temperatur ist, wenn der eine der ersten und zweiten Oszillatoren der zweite Oszillator (LO2') ist und seine Frequenz linear von dem Kehrwert der Temperatur abhängt oder wenn der eine der ersten und zweiten Oszillatoren der erste Oszillator (LO1') ist und seine Frequenz linear von der Temperatur abhängt.

9. Sensor nach einem der Ansprüche 1 bis 8, wobei der Sensor einrichtet ist, so dass die Dauer, die durch die Frequenz des ersten Oszillators bestimmt wird, wenigstens 100-mal größer ist als eine Periode des zweiten Oszillators (LO2').

10. Sensor nach einem der Ansprüche 1 bis 9, wobei der Sensor eingerichtet ist, so dass die Steuerfrequenz des geschalteten kapazitiven Elements (R) wenigstens 10-mal größer ist als die Frequenz des ersten oder des zweiten Oszillators.

11. Sensor nach einem der Ansprüche 1 bis 10, wobei der erste und der zweite Oszillator jeweils keinen Quarz aufweisen.

## Claims

1. Temperature sensor (2) comprising:
a first oscillator (LO1') and a second oscillator (LO2');
a counter (COUNTER) configured to count a number (P) of periods of the second oscillator (LO2') over a duration determined by a period of the first oscillator (LO1'); and
a calculation circuit configured to determine a temperature value based on said counted number (P),
the sensor being **characterized in that**:
one (LO1'; LO2') of the first and second oscillators (LO1', LO2') is configured so that its frequency linearly depends on temperature or on the inverse of temperature according to a coefficient multiple of the inverse of a resistance value of a resistive component (R) of said one (LO1'; LO2') of the first and second oscillators;
said resistive component (R) is implemented by a switched capacitive element; and
a control frequency of the switched capacitive element (R) is determined by the frequency of the other one (LO2'; LO1') of the first and second oscillators.

2. Sensor according to claim 1, wherein said one (LO1'; LO2') of the first and second oscillators (LO1', LO2') comprises:
an oscillating circuit (OC); and
a current source (300) configured to deliver a bias current (Ibias) to the oscillating circuit (C), the current source (300) being of the type proportional to absolute temperature or of the type complementary to absolute temperature.

3. Sensor according to claim 2, wherein :
the current source (300) comprises the resistive component (R) ;
the resistive component (R) is configured to convert a voltage into a first current; and
the current source (300) is configured so that the bias current (Ibias) is a copy of the first current to within a multiplication factor.

4. Sensor according to claim 3, wherein the oscillating circuit (OC) is a ring oscillator.

5. Sensor according to claim 3, wherein the oscillating circuit (OC) is a relaxation oscillator comprising an RS flip-flop (500).

6. Sensor according to claim 2, wherein the oscillating circuit (OC) comprises the resistive component (R).

7. Sensor according to any one of claims 2 to 6, wherein :
the oscillating circuit (OC) comprises at least one first inverter (INV1, INV3) having its threshold voltage determining the frequency of said one (LO1'; LO2') of the first and second oscillators (LO1', LO2'); and
said one (LO1'; LO2') of the first and second oscillators further comprises:
a second inverter (INVref) identical to the first oscillator and having its output connected to its input,
an error amplifier (ERR) configured to deliver a signal (Vth_CTRL) indicating a deviation between an output voltage of the second inverter (INVref) and a reference threshold voltage (Vref), and
a circuit (CTRL) configured to control a threshold voltage of the first and second inverters (INVref; INV1, INV3) based on the signal (Vth_CTRL) delivered by the error amplifier (ERR) so that the threshold voltage of the first and second inverters is equal to the reference voltage (Vref) .

8. Sensor according to any one of claims 1 to 7, wherein the sensor comprises a calibration circuit configured to:
- receive from the counter (COUNTER) the number P of periods of the second oscillator (LO2') counted over the duration determined by the period of the first oscillator (LO1');
- determine, when the calibration circuit receives a calibration request, and based on a known calibration temperature and on number P, a constant coefficient J such that:
a) P is equal to J times the calibration temperature if said one of the first and second oscillators (LO1', LO2') is the first oscillator (LO1') and has its frequency linearly depending on the inverse of temperature or if said one of the first and second oscillators is the second oscillator (LO2') and has its frequency linearly depending on temperature; or
b) P is equal to J times the inverse of temperature if said one of the first and second oscillators is the second oscillator (LO2') and has its frequency linearly depending on the inverse of temperature or if said one of the first and second oscillators is the first oscillator (LO1') and has its frequency linearly depending on temperature.

9. Sensor according to any one of claims 1 to 8, wherein the sensor is configured so that the duration determined by the frequency of the first oscillator is at least 100 times greater than a period of the second oscillator (LO2').

10. Sensor according to any one of claims 1 to 9, wherein the sensor is configured so that the control frequency of the switched capacitive element (R) is at least 10 times greater than the frequency of said one of the first and second oscillators.

11. Sensor according to any one of claims 1 to 10, wherein each of the first and second oscillators comprises no quartz.
